# EUROPÄISCHE PATENTANMELDUNG

(11) **EP 2 186 839 A1**
(43) Veröffentlichungstag der Anmeldung: **19.05.2010**
(21) Anmeldenummer: 08019817.9
(22) Anmeldetag: 13.11.2008
(51) Int. Cl.: C08G 18/08, C08G 18/12, C08G 18/28, C08G 18/42, C08G 18/66, C08G 18/72, C09D 175/06

(54) **Polyurethandispersionen für Beschichtungen mit Barriereeigenschaften**

(71) Anmelder: Bayer MaterialScience AG, 51368 Leverkusen (DE)
(72) Erfinder: Blum, Harald, Dr., 97840 Hafenlohr (DE); Tillack, Jörg, Dr., 42719 Solingen (DE); Trinks, Rainer, Dr., 41539 Dormagen (DE)

(57) **Zusammenfassung**

Die Erfindung betrifft neue wässrige Polyurethandispersionen zur Herstellung von Beschichtungen mit Barriereeigenschaften, deren Herstellung und Verwendung als Bindemittel in Lacken, Besehiehtungen und Klebstoffen.

## Beschreibung

Die Erfindung betrifft neue wässrige Polyurethandispersionen zur Herstellung von Beschichtungen mit Barriereeigenschaften, deren Herstellung und Verwendung als Bindemittel in Lacken, Beschichtungen und Klebstoffen.

Wässrige Materialien auf Polymerbasis werden in einer steigenden Zahl von Anwendungen eingesetzt. Polymere Beschichtungen finden dabei zunehmend Interesse und Verwendung in den unterschiedlichsten Anwendungen. In vielen Bereichen sind hohe Durchlässigkeiten für Umwelteinflüsse wie z.B. sauren Regen, Durchlässigkeiten für flüssige bzw. aggressive Substanzen wie Lösemittel, Reinigungsmittel, Wasser und auch Weichmacher problematisch. Es wird daher häufig beansprucht, zusätzliche Schichten als Penneationsbarriere auf Substrate als Barriere gegen den Stofftransport aufzutragen, so z.B. in EP-A 1 747 898, WO-A 2005/093000, EP-A 1228 889.

Hohe Barriereeigenschaften können z.B. durch solche Mehrfachschicht-Systeme z.B. aus anorganischen und polymeren Materialien erreicht werden, dies ist in aller Regel jedoch sehr aufwendig. Es besteht somit weiterhin Bedarf nach verbesserten Produkten, vor allem nach solchen Produkten die neben den Barriereeigenschaften noch weitere für verschiedene Anwendungen wichtige Anforderungen erfüllen.

Zusätzlich zu den Barriereeigenschaften werden von Lacken und Beschichtungen je nach Anwendungsgebiet eine Reihe weiterer wichtiger Eigenschaften gefordert, die häufig einer guten Barrierewirkung entgegenstehen.

Von Dispersionen für Einbrennlacke mit Barriereeigenschaften, z.B. für die Einbrennbeschichtung von metallischen Materialien, Glas, Keramik usw., oder für bei Umgebungstemperatur aushärtbare, wässrige 2-Komponenten Polyurethansysteme mit Barriereeigenschaften, z.B. gegen aggressive Lösemittel bzw. Reinigungsmaterialien werden zusätzlich u.a. sehr gute filmoptische Eigenschaften wie Fülle, Glanz und Verlauf, eine gute Haftung auf unterschiedlichen Substraten, sowie ausgewogene filmmechanische Eigenschaften, z.B. bezüglich Härte und Elastizität gefordert.

Dispersionen für Beschichtungen mit Barriereeigenschaften, die z.B. im Bereich von Tinten und Druckfarben z.B. als Topcoat, Barrierecoat, Sperrschicht, Schutzbeschichtung, Primer, Overcoat oder in ähnlichen Anwendungen eingesetzt werden, müssen häufig zusätzlich zur Barrierewirkung z.B. gegen Weichmacher, gegen Alkohole bzw. Lösemittel, gegen ölige bzw. wässrige Substanzen, weitere Anforderungen erfüllen, wie z.B. Thermostabilität und ggf. auch Bedruckbarkeit. Insbesondere die Kombination einer sehr guten Barrierewirkung gegen Weichmacher, Alkohol und ölige Substanzen und eine sehr Bedruckbarkeit in einem Produkt zu vereinen, ist bisher nicht möglich gewesen.

Aufgabe der vorliegenden Erfindung war es deshalb, Dispersionen zur Verfügung zu stellen, die bei einer sehr guten Barrierewirkung bei Verwendung z.B. im Bereich von Einbrennlacken, wässrigen 2-Komponenten Polyurethanlacken und im Tinten- und Druckfarbenbereich zusätzlich weitere wichtige Eigenschaften aufweisen, wie z.B. im Tinten und Druckfarbenbcreich eine sehr gute Bedruckbarkeit, darüber hinaus hohe Hitzestabilität, wie z.B. im Bereich von Einbrennlacken oder von wässrigen 2- Komponenten Polyurethansystemen sehr gute filmoptische Eigenschaften wie Fülle, Glanz und Verlauf, eine gute Haftung auf unterschiedlichen Substraten, sowie ausgewogene filmmechanische Eigenschaften, mit anderen Polymeren, wie z.B. Polyvinylalkoholen, Polyurethandispersionen oder Poly(meth)acrylatdispersionen, sowie mit Vernetzerharzen sehr gut verträglich sind und darüber hinaus möglichst wenig organische Lösemittel aufweisen.

Überaschenderweise wurde jetzt gefunden, das spezielle Polyurethandispersionen hervorragend geeignet sind, um Beschichtungen herzustellen, die sich durch sehr gute Barriereeigenschaften, insbesondere gegen Weichmacher, gegen Lösemittel, gegen Wasser und gegen ölige Substanzen auszeichnen, hitzebeständig sind, Filme und Beschichtungen mit hoher Härte, guter Haftung und sehr guter Filmoptik ermöglichen, und darüber hinaus in den Fällen wo das gefordert ist, eine sehr gute Bedruckbarkeit aufweisen.

Die im Folgenden genannten Prozentzahlen der einzelnen Komponenten ergänzen sich immer zu 100 Gew. -%.

Gegenstand der Erfindung daher ein Verfahren zur Herstellung von wasserdispergierbaren Polyurethanen, bei dem
a) 5 bis 60 Gew.-% einer difunktionelle Polyisocyanate enthaltenden Polyisocyanatkomponente,
b) 20 bis 90 Gew.-% einer aromatische Strukturen enthaltender Polyol-, Polythiol- und/oder Polyamin-Komponente,
c) 1 bis 15 Gew.-% mindestens einer hydrophilierenden Komponente, deren Verbindungen neben mindestens einer hydrophilen Gruppe mindestens eine isocyanatreaktive Gruppe aufweisen,
d) 1 bis 40 Gew.-% einer hydrophobierenden Komponente und
e) 0 bis 25 Gew.-% weiterer Komponenten die isocyanatfunktionell bzw. isocyanatreaktiv sind,
miteinander umgesetzt werden, wobei sich die Prozentangaben auf das Reaktionsprodukt der Komponenten a) bis e) bezieht und sich zu 100 Gew.-% aufaddieren.

Ferner sind ein Gegenstand der Erfindung die so erhältlichen Polyurethane selbst sowie wässrige Polyurethandispersionen, die diese Polyurethane enthalten.

Bevorzugt werden im erfindungsgemäßen Verfahren
a) 7 bis 50 Gew. -% einer difunktionelle Polyisocyanate enthaltenden Polyisocyanatkomponente
b) 30 bis 80 Gew.-% einer aromatische Strukturen enthaltenden Polyol und/oder Polythiol und/oder Polyamin Komponente
c) 2 bis 10 Gew. -% einer hydrophilierenden Komponente, deren Verbindungen neben mindestens einer hydrophilen Gruppe mindestens eine, vorzugsweise zwei isocyanatreaktive Gruppe aufweisen,
d) 4 bis 28 Gew. -% einer hydrophobierenden Komponente und
e) 0 bis 15 Gew. -% weiterer Komponenten die isocyanatfunktionell bzw. isocyanatreaktiv sind
miteinander umgesetzt..

Für die Polyisocyanatkomponente a) geeignete, mindestens difunktionelle Polyisocyanate sind z.B. 1,3-Cyclohexandiisoeyanat, 1-Methyl-2,4-diisoeyanato-cyclohexan, 1-Methyl-2,6-diisoeyanatocyclohexan, Tetramethylendiisocyanat, 4,4'-Diisocyanatodiphenylmethan, 2,4'-Diisoeyanatodiphenylmethan, 2,4-Diisocyanatotoluol, 2,6-Diisocyanatotoluol, α,α,α',α'-Tetra-methyl-m- oder p-Xylylendiisocyanat, Xylylendiisocyanat, hydriertes Xylytendiisocyanat, 1,6-Hexamethylendiisoeyanat, 1-Isocyanato-3,3,5-trimethyl-5-isocyanatomethyl-cyclohexan (Isophorondiisocyanat), Hexahydro-2,4 bzw. 2,6-Diisocyanatotoluol und 4,4'-Diisocyanatodicyclohexylmethan, sowie deren Mischungen, gegebenenfalls auch mit anderen Isocyanaten.

Es können auch höherfunktionelle Homologe, Oligomere bzw. Prepolymere auf Basis der beispielhaft genannten, mindestens difunktionellen Polyisocyanate verwendet werden, die z.B. Urcthan-, Bimet-, Carbodiimid-, Isocyanurat-, Allophanat-, Iminooxadiazindion-, Uretdion-, Amid-, Imid,-Ether-, Carbonat- und/oder Estergruppen aufweisen.

In untergeordneten Mengen können auch monofunktionelle Polyisocyanate mit verwendet werden, wie beispielsweise Stearylisocyanat, Butylisocyanat, Phenylisocyanat. Auch andere monofunktionelle Diisocyanate können mit verwendet werden.

Bevorzugt enthält die Polyisocyanatkomponente a) 50 bis 100 Gew.-% cycloaliphatische Diisocyanate wie Isophorondiisocyanat, Hexahydro-2,4 bzw. 2,6-Diisocyanatotoluol, 1-Methyl-2,4(2,6)-diisocyanatocyclohexan, 4,4'-Diisocyanatodicyclohexylmethan und/oder aromatische Di- bzw. Polyisocyanate wie 2,4- und/oder 2,6-Diisocyanatotoluol, 4,4'- bzw. 2,4'- Diisocyanatodiphenylmethan und/oder dessen Homologe.

Besonders bevorzugt enthält die Polyisocyanatkomponente a) 50 bis 100 Gew. -% 2,4- und/oder 2,6-Diisocyanatotoluol oder 4,4'- bzw. 2,4'-Diisocyanatodiphenylmethan und/oder dessen Homologe.

Als Verbindungen der Komponente b) sind z.B. geeignet Polyesterpolyole, Polycarbonatpolyole, Polyetherpolyole, Polyamidpolyole, Polyimidpolyole, Polymerisatpolyole, Polyurethanpolyole, Polyurethanthiole, Potyurethanamine, Polybarnstoffdiole, Polyharnstoffthiole, Polyhamstoffamine, Polyesterthiole, Polycarbonatthiole, Polyetherthiole, Polyamidthiole, Polyimidthiole, Polyesteramine, Polyetheramine, Polycarbonatamine, Polyamidamine, Polyimidamine, Mischungen, Kombinationen und Blockcopolymere der genannten und/oder anderer Rohstoffe

Bevorzugte Komponenten b) sind Polyesterpolyole, die mindestens einen aromatischen Polyester enthalten.

Die bevorzugt in Komponente b) eingesetzten Polyesterpolyole enthalten mindestens einen aromatischen Polyester, der das Umsetzungsprodukt ist aus
b1) mindestens einer aromatischen Di- und/oder Tricarbonsäure bzw. deren Anhydrid,
b2) mindestens einem Diol,
b3) ggf. weiteren Komponenten wie z.B. Triole, Tetraolen, monofunktionellen Alkoholen, Monocarbonsäuren, Monoepoxiden, Bisepoxiden, Polyepoxiden, Lactonen und/oder aliphatischen bzw. cycloaliphatischen Di- oder Tricarbonsäuren bzw. deren Anhydriden,
wobei der Anteil an Komponente b1) in der Polyolkomponente b) mindestens 38, bevorzugt mindestens 52 Gew.- % beträgt.

Besonders bevorzugte Verbindungen der Komponente b) sind aromatische Polyester mit einer Hydroxylzahl von 10 bis 230, vorzugsweise von 48 bis 160 mg KOH/g Substanz, die Umsetzungsprodukte sind von
b1) 38 bis 72, bevorzugt 52 bis 72 Gew. -% mindestens einer aromatischen Di- und/oder Tricarbonsäure bzw. deren Anhydrid,
b2) 20 bis 55, bevorzugt 25 bis 50 Gew. -% mindestens einem Diol,
b3) 0 bis 40, bevorzugt 0 bis 25 Gew. % weiteren Komponenten wie z.B. Triolen, Tetraolen, monofunktionellen Alkoholen, Monocarbonsäuren, Monoepoxiden, Bisepoxiden, Polyepoxiden, Lactonen, aliphatischen bzw. cycloaliphatischen Di- oder Tricarbonsäuren bzw. deren Anhydriden.

Geeignete Verbindungen der Komponente b1) sind z.B. Phthalsäureanhydrid, Isophthalsäure, Terephthalsäure, Tetrachlorphthalsäure, Trimellithsäureanhydrid und Pyromellithsäureanhydrid.

Bevorzugte Verbindungen der Komponente b1) sind Terephthalsäure und/oder Isophthatsäure, bzw. Mischungen der Terephthalsäure mit Isophthalsäure und/oder Phthalsäureanhydrid. Es ist auch möglich anstelle der Terephthalsäure die entsprechenden Cl-C4 Alkylester der Terephthalsäure einzusetzen.

Geeignete Verbindungen der Komponente b2) sind z.B. Ethylenglykol, 1,2- Propandiol, 1,3-Propandiol, Neopentylglykol, 1,4-Butandiol, 1,3 Butandiol, 1,2-Butandiol, Butendiol, Butindiol, 1,6-Hexandiol, 1,4-Cyclohexandimethanol, 1,4-Cyclohexandiol, 2,2-Dirnethyl-3-hydroxypropionsäure-(2,2-dimethyl-3-hydroxypropylester), Diethylenglykol, Dipropylenglykol, Triethylenglykol, Tripropylenglykol, Tetraethylenglykol, stellungsisomere Diethyloctandiole, hydrierte Bisphenole, hydrierte und ethoxylierte Bisphenole, ethoxyliertes Brenzkatechin, ethoxyliertes Resorcin, ethoxyliertes Hydrochinon, ethoxylierte und alkylsubstituierte Hydrochinone, Resorcine und Brenzkatcchine, 2-Methy-1,3-propandiol, 3-Methyl-1,5-pentandiol, Trimcthylpentandiol, 1,8-Octandiol und/oder Tricyclodecan-dimethanol und Mischungen der genannten und ggf. auch anderer Diole.

Bevorzugte Verbindungen der Komponente b2) sind Ethylenglykol, 1,2- bzw. 1,3-Propandiol, Neopentylglykol, 1,4-Butandiol und/oder 1,6-Hexandiol.

Geeignete Verbindungen der und ggf. mit zu verwendenden Komponente b3) können sein: Rizinusöl, Trimethylopropan, Glycerin, Pentaerythrit, e-Caprolacton, Tetrahydrophthalsäureanhydrid, Hexahydrophthalsäureanhydrid, Cyclohexandicarbonsäure, Adipinsäure, Azelainsäure, Sebacinsäure, Glutarsäure, Maleinsäure(anhydrid), Fumarsäure, Itaconsäure, Malonsäure, Korksäure, 2-Methylbemsteinsäure, 3,3-Diethylgtutarsäure, 2,2-Dimethylbemsteinsäure, Dimerfettsäuren, Dimerfettsäuregemische, Monoepoxide wie z.B der Glycidylester der Versaticsäure, Bisepoxide wie z.B. epoxidierte Bisphenole, Polyepoxide, epoxidierte Fettsäuren bzw. Öle, Butylglykol, Butanol, Pentanol, 2-Ethylhexansäure, tert-Butylbenzoesäure, Benzoesäure, Sojaölfettsäure, Ölsäure, Stearinsäure, C8- bis C30-Monocarbonsäuren bzw. deren Gemische.

Es ist auch möglich, amino- und/oder thiofunktionelle Verbindungen in Komponente b3) mit zu verwenden, wie z.B. Isophorondiamin, Hexamethylendiamin, Ethylendiamin, Butylamin, Diethanolamin, Diisopropanolamin, Diphenylmethyndiamine (MDA). Es ist auch möglich ethoxylierte bzw. propoxylierte Alkohole wie z.B. ethyoxyliertes Trimethylolpropan in Komponente b3) mit zu verwenden.

Die Säurezahl der entsprechenden Polyester in Komponente b) liegt üblicherweise bei 10 bis 0,1 mg KOH/g, bevorzugt bei 5 bis 1 mg KOH/g.

Die zahlenmittleren Molekulargewichte der in Polyolkomponente b) eingesetzten Verbindungen liegt typischerweise bei 400 bis 12000 , bevorzugt bei 800 bis 4000 g/mol.

Die Verbindungen der Komponente b) weisen eine Funktionalität in Form von Hydroxy-, Thio- und/oder Aminogruppen, bevorzugt von Hydroxygruppen, von typischerweise 1,2 bis 5, bevorzugt 1,8 bis 2,5 auf.

In Komponente b) können auch Mischungen aus zwei oder mehreren der beispielhaft genannten Substanzen eingesetzt werden, wie Mischungen eines aromatischen Polyesters mit einem aliphatischen Polyester oder/und mit einem Polycarbonatdiol, oder/und mit einem Polyetherdiol. Es können z.B; auch mehrere aromatische Polyester gemischt eingesetzt werden.

Die Komponente b) besteht bevorzugt zu mindestens 50 Gew. -%, besonders bevorzugt zu 75 Gew. -% und ganz besonders bevorzugt zu 100 Gew. -% aus einem oder mehreren aromatischen Polyestern.

Die als Komponente b) eingesetzten Polyester weisen Schmelz- bzw. Erweichungstemperaturen von größer als -20°C, vorzugsweise von größer als 30°C und besonders bevorzugt von größer als 55°C auf.

Geeignete Hydrophilierungsmittel der Komponente c) sind Verbindungen mit mindestens einer isocyanatreaktiven Gruppe, wie z.B. primäre und/oder sekundäre Aminogruppen und/oder Hydroxylgruppen sowie mindestens einer Säuregruppe wie z.B. Carboxyl- oder Sulphonsäuregruppen und/oder deren durch Zugabe von Neutralisationsmitteln gebildeten Salze oder mindestens einer tertiären Aminogruppe bzw. dem Salz einer tertiären Aminogruppe.

Hydrophilierungsmittel der Komponente c) werden üblicherweise in Mengen von 1 bis 15 Gew. - %, vorzugsweise von 2 bis 10 Gew. -% bevorzugen auf das Endprodukt verwendet.

Geeignete Hydrophilierungsmittel sind z.B. anionische Hydrophilierungsmittel wie Mono- und Dihydroxycarbonsäuren, Mono- und Diaminocarbonsäuren, Mono- und Dihydtoxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Dimethylolessigsäure, 2,2-Dimethylolpentansäure, Dihydroxybernsteinsäure, Hydroxypivalinsäure, N-(2-Aminoethyl)-alanin, 2-(2-Amino-ethylamino)-ethansulfonsäure, Ethylendiamin-propyl- oder butylsulfonsäure, 1,2- oder 1,3-Propylendiamin-ethylsulfonsäure, Äpfelsäure, Zitronensäure, Glykolsäure, Milchsäure, Glycin, Alanin, Taurin, Lysin, 3,5-Diaminobenzoesäure, 6-Aminohexansäure, 11- Aminoundecansäure, Aminoessigsäure ein Additionsprodukt von IPDA, Hexmethylendiamin oder anderer Diamine und Acrylsäure (EP-A 0 916 647, Beispiel 1) und dessen Alkali- und/oder Ammoniumsalze; das Addukt von Natriumbisulfit an Buten-2-diol-1,4, Polyethetsulfonat, das propoxylierte Addukt aus 2-Butendiol und NaHSO₃, z.B. beschrieben in der DE-A 2 446 440 (Seite 5-9, Formel I-III) bzw. die Salze der beschriebenen anionischen Hydrophilierungsmittel, sowie Mischungen der genannten anionischen und ggf. auch anderen anionischen Hydrophilierungsmitteln , ggf. auch zusammen mit nichtionischem Hydrophilierungsmittel.

Nichtionische Hydrophilierungsmittel können z.B. sein Amino und/oder Hydroxylgruppen enthaltende, mono- und/oder di- und/oder trifunktionelle Ethylenoxidpolyether, Propylenoxid/Ethylenoxidcopolyether bzw. Propylenoxid/Ethylenoxidblockpolyether des Molekulargewichtsbereichs 200 bis 3000 g/mol.

Bevorzugte nichtionische Verbindungen sind monohydroxyfunktionelle Polyalkylenoxidpolyether, die mindestens 75 mol -% Ethylenoxid-, besonders bevorzugt 100 mol -% Ethylenoxideinheiten aufweisen und ein Molekulargewicht von 350 bis 2500, besonders bevorzugt von 500 bis 1100 g/mol aufweisen.

Falls nichtionische Hydrophilerungsmittel verwendet werden, geschieht dies vorzugsweise in Kombination mit ionischen Hydrophilierungsmitteln, dabei sind monohydroxyfunktionelle nichtionische Hydrophilierungsmittel bevorzugt, es ist selbstverständlich auch möglich, di- oder auch trifunktionelle nichtionische Hydrophilierungsmittel mitzuverwenden.

Besonders bevorzugte erfindungsgemäße Polyurethane enthalten keine nichtionischen Hydrophilierungsmittel.

Geeignete Hydrophilierungsmittel sind ebenfalls kationische Hydrophilierungsmittel wie mono-, di- oder trihydroxyfunktionelle tertiäre Amine bzw. mono-, di- oder triaminofunktionelle tertiäre Amine und deren Salze wie N-Methyldiethanolamin, N-Ethyldiethanolamin, N-Methyldiisopropanolamin, Triisopropanolamin, Triethanolamin, Dimethylethanolamin, Dimethyl-isopropanolamin bzw. die Salze der beschriebenen kationischen Hydrophilierungsmittel, sowie Mischungen der genannten kationischen und ggf. auch anderer kationischer und/oder nichtionischer Hydrophilierungsmitlel.

Bevorzugte ionische bzw. potentielle ionische Hydrophilierungsmittel sind solche, die über Carboxy- oder Carboxylat- und/oder Sulfonatgruppen verfügen.

Besonders bevorzugte Hydrophilierungsmittel sind 2-(2-Amino-ethylamino-)ethansulfonsäure, das Additionsproduktes von IPDA oder Ethylendiamin und Acrylsäure (EP-A 0 916 647, Beispiel 1), Dimethylolpropionsäure, Dimethylolbuttersäure und Hydroxypivalinsäure.

Die Säurezahl der erfindungsgemäßen Polyurethane beträgt 3 bis 70 mg KOH/g Substanz, bevorzugt 5 bis 50 und besonders bevorzugt 10 bis 40 mg KOH/g Substanz.

Die freien Säuregruppen stellen "potentiell ionische" Gruppen dar, während es sich bei den durch Neutralisation mit Neutratisationsmitteln erhaltenen salzartigen Gruppen, Carboxylat- bzw**.** Sulphonatgruppen, um ionische Gruppen handelt.

Geeignete hydrophobierende Verbindungen der Komponente d) sind z.B.
d1) hydroxy-, thio- und/ oder aminofunktionelle Verbindungen mit einer oder mehreren, linearen und/oder verzweigten, gesättigten und/oder ungesättigten C6- bis C30-, vorzugsweise C8 bis C22- und besonders bevorzugt C12 bis C20 Kohlenwasser-stoffketten und/oder
d2) hydroxy-, thio- und/oder aminofunktionelle aromatische, ggf. substituierte Kohlenwasserstoffringe enthaltende Verbindungen.

Die Verbindungen der Komponenten d) bzw. d1) und d2) sind mono- bis trifunktionell, bevorzugt mono- bis difunktionell und besonders bevorzugt monofunktionell, jeweils bezogen auf die isocyanatreaktiven Hydroxy-, Amino- und/oder Thiogruppen.

Geeignete hydrophobierende Verbindungen der Komponente d1) sind z.B. 1-Hexanol, 4-Methyl-2-pentanol, 2-Ethyl-1-butanol, 2-Ethylhcxanol, 1-Octanol, 2-Octanol, 3-Octanol, 1-Nonanol, 2-Nonanol, 2,4,4-Trimethyl-1-hexanol, 3,5,5-Trimethyl-1-hexanol, 1-Decanol, 2-Decanol, 3-Decanol, 4-Decanol, 1-Dodecanol, 2,2,4,6,6-Pentamethyl-4-mercaptoheptan, 1-Dodecanthiol, Hexadecanthiol, 1-Tetradeeanol, 1-Hexandeeanol, 1-Heptadecanol, Stearylalkohol, Eicosanol, Behenylakohol, Cetylalkohol, Laurylakohol, Myristylalkohol, Oleylalkohol, Caprylakohol, Decylalkohol, 1-Octadecanol, 2-Hexyldecan-l-ol, Guerbct-Alkohole, gesättigte und/oder ungesättigte C6-C30 Fettalkohole und Fettalkoholgemische aller Art, Terpenalkohote, Monoester von Diolen mit C6-C30 Fettsäuren, Monoester von Triolen mit C6 - C30 Fettsäuren wie Z.B. Glycerinmonostearat, Glycerinmonooleat, Glycerinmonocetylat, Rizinusöl, hydriertes Rizinusöl, Umesterungsprodukte aus Rizinusöl und anderen Ölen wie z.B. Sojaöl, Erdnussöl, Leinöl oder anderen Ölen, Dodecanamin, Tetradecanamin, Hexadecanamin, Octadecanamin, N-Methyl-1-octadecanamin, Kokosamin, Laurylamin, Stearylamin, C16-C22 Alkylamin und/oder Oleylamin und /oder Mischungen der beispielhaft genannten und ggf. auch anderer entsprechender Verbindungen.

Bevorzugte hydrophobierende Verbindungen der Komponente d1) sind monofunktionelle, lineare oder/und verzweigte und/oder ungesättigte C8-C22 Alkohole und/oder Amine wie z.B. Stearylatkohol, Cetylalkohol, Laurylalkohol, Oleylalkohol, Myristylalkohol, C8-C22 Fettalkohole bzw. Fettalkoholgemische, die den genannten Alkoholen entsprechenden Aminoverbindungen wie z.B. Stearylamin, Laurylamin, Cetylamin, Fettamine, usw., bzw. Gemische der genannten Komponenten.

Ganz besonders bevorzugte Verbindungen der Komponente d1) sind monofunktionelle, lineare oder/und verzweigte und/oder ungesättigte C8-C22 Alkohole wie z.B, Stearylalkohol, Cetylalkohol, Laurylafkohol, Oleylalkohol, Myristylalkohol, C8-C22 Fettalkohole bzw. Fettalkoholgemische bzw. Gemische der genannten Alkohole.

Die hydrophobiercnden Komponenten d) , insbesondere die Komponenten d1) bewirken eine verbesserte Barrierewirkung z.B. gegen Wasser bzw. Alkoholen, darüber hinaus erhöhen Sie die Haftung von Zubereitungen bzw. Beschichtungen oder Klebstoffen, die die erfindungsgemäße Polyurethandispersion enthalten, auf unterschiedlichsten Substraten, sie ermöglichen außerdem in den Anwendungsbereichen wo das relevant ist, einen besseren Verlauf und eine bessere Filmoptik und bewirken ebenso in Anwendungen, wo das notwendig, ist eine bessere Bedruckbarkeit.

Geeignete hydrophobierende aromatische, ggf. substituierte Kohlenwasserstoffringe enthaltende Verbindungen der Komponente d2) sind z.B. Benzylalkohol, tert.-Butylbenzylalkohol, 2-Phenoxyethanol, 1-Phenoxy-2-propanol, 2-Chlorphenol, 3-chlorphenol, 4-Chlorphenol, Phenol, 2,4-Dichlorphenol, 2,5-Dichlorphenol, 2,6-Dichlorphenol, 2,4,5-Trichlorphenol, 2,4,6-Trichlorphenol, 2-Nitrophenol, 3-Nitrophenol, 4-Nitrophenol, 4-Chlor-2-nitrophenol, 2-Chlor-5-nitrophenol, Thiophenol, Kresol, 5-Chlor-2-methylphenol, 2-Ethylphenol, 1-Phenylethanol, 2-Phenylethanol, 2,3-Dimethylphenol, 3,4-Dimethylphenol, 2,6-Dimethylphenol, 2,4-Dimethylphenol, 3,5-Dimethylphenol, 2,5-Dimethylphenol, 3-Phenyl-l-propanol, 2-Isopropylphenol, 2-tert.-Butylphenol, 4-tert.-Butylphenol, Thymol, 4-tert.-Butylphenol, Zimtalkohol, 1,2,3,4-Tetrahydro-1-naphtol, Naphtol, 2-Phenylphenol, 3-Phenylphenol, 4-Phenylphenol, Benzylphenol, Benzylamin, tert.-Butylbenzylamin, 2-Chlorbenzolamin, 3-Chlorbenzolamin, 4-Chlorbenzolamin, n-Ethyl-2-methylanilin, 2-Methylanilin, 2-Chlor-6-methylanilin, 3-Methylanilin, N-Ethyl-3-methylanilin, N-Butyl-3-methylanilin, N-(2-Hydroxyethyl)-3-methylanilin, 3-Trifluormethylanilin, 2-Chlor-5-methylanilin, 4-Methylanilin, N,4-Dimethylanilin, N-Ethyl-4-methylanilin, N-Methylbenzylamin, N-Phcnyl-benzylamin, N-Benzyl-o-Toluidin, Dibenzylamin, 2-Ethylanilin,Bis-(2-ethyl-phenyl)-amin, 4-Ethylanilin, 1-Phenyl-ethylamin, 1-Amino-2-Phenylethan, 2,3-Dimethylanilin, 2,6-Dimethylanilin, 3,4-Dimethylanilin, 2,4 Dimethylanilin, 3,5-Dimethylanilin, 2,5-Dimethylanilin, 2-Isopropylanilin, 2-methyl.6.ethylanilin, Trimethylanilin, 4-tert.-Butylanilin, 2,6-diethylanilin, 2,6-Diisopropylanilin, 4-Dodecylanilin, 4 Cyclohexylanilin, 1-Naphthylamin, N-Ethyl-1-naphtylamin, N-Pherlyl-2-naphthylamin, 1-Aminopyren, 1,2-Diaminobenzol, 1,3-Diaminobenzol, 1,4-Diaminobenzol, 2,4 Diaminotoluol, 2,6-Diaminotoluol, 3,4-Diaminotoluol, m-Xylylendiamin, 4,6-Dimethyl-1,3-benzoldimethanamin, 2,4,6-Triisopropyl-m-phenylendiamin, 2,4,6-Triisopropylanilin, 1,5-Naphtalindiamin, 1,8-Naphtalindiamin, 2.7-Naphtalindiamin, Bis-(4-amino-phenyl)-methan, 3,3-Dimethylbenzidin, 4,4'-Cyclohexylidenbisbenzolamin, 2-Aminophenol, 2-methoxybenzolamin, 2-Trifluormethoxybenzolamin, 2-Phenoxybenzolamin, 3-Aminophenol, 3-methoxyanilin, 3-(Dimethylamino)phenol, 3-(Diethylamino)phenol, 3-(Phcnylamino)phenol, 4-Aminophenol, 4-methoxybenzolamin, 4-Ethoxybenzolamin, 4,4'-Oxybisanilin, 4-Ethoxy-N-phenylbenzolamin, 4-(2-Naphtalinamino)-phenol, 3-Methoxy-4-methylanilin, 4-Ainino-3-methylphenol, 4-Methoxy-2-methylbenzolamin, 3-Amino-4-methylphenol, 5-methoxy-2-methylbethzolamin, 2-Amino-4-methylphenol, 2-Methoxy-5-methylbenzolamin, 2-Ethoxy-5-methylbenzolamin, 5-Amino-1-naphtol, 1-Amino-2-naphtol, 3-Amion-2-naphtol, Methyl-(7-hydroxy-1-naphtyl)-carbamat, 2-(4-Aminophenyl)-2-(4-hydroxyphenyl)-propan, 2,4-Dimethoxyanilin, 2,5-Diimethoxyanilin, 4-Aminoacotophenon, 1-Aminoanthrachinon, 2-Amionanthrachinon, 1,4-Diamino-9,10-anthrachinon, 1-Amino-2-methyl-9,10-anthrachinon, 2-Aminobenzoesäurealkylester, 3-Aminobenzonitril, 4-Aminobenzamid, 4-Amino-1,3-benzoldicarbonitril und Gemische der genannten und ggf. auch weiterer entsprechender Verbindungen.

Bevorzugte hydrophobierende aromatische, ggf. substituierte Kohlenwasserstoffringe enthaltende Verbindungen der Komponente d2) sind monohydroxy- und/oder monoaminofunktionelle Verbindungen der oben beispielhaft genannten Art wie z.B. Benzylalkohol, tert.-Butylbenzylalkohol, Zimtalkohol, 2-Phenoxyethanol, Benzylamin, tert.-Butytbenzytamin, Methylaniline, 1-Phenyl-ethylamin, 1-Amino-2-Phenylethan und Dimethylaniline.

Ganz besonders bevorzugt als Komponente d2) sind monohydroxyfunktionelle Verbindungen wie z.B. Benzylalkohol, tert.-Butylbenzylatkohol, Zimtalkohol und 2-Phenoxyethanol.

Die Komponente d2) wirkt insbesondere barriereverstärkend, z.B. gegenüber Weichmachern, Alkoholen, Lösemitteln und auch Zubereitungen, die solche Substanzen enthalten.

In einer bevorzugten Ausführungsform werden im erfindungsgemäßen Verfahren sowohl die Komponente d1) als auch Komponente d2) verwendet.

Bevorzugt werden im erfindungsgemäßen Verfahren 0,5 bis 26 Gew. -%, besonders bevorzugt 3 bis 18 Gew. -% Komponenten d1) und 0,5 bis 14 Gew. -%, besonders bevorzugt 1 bis 10 Gew. -% Komponenten d2) bezogen auf das Polyurethan eingesetzt.

Verbindungen der Komponente e) , die ggf. mit eingesetzt werden können, sind z.B. niedermolekulare hydroxy- amino- und/oder thiofunktionelle Verbindungen, z.B. Di-, Tri- und/oder Tetraole wie Ethylenglykol, Propylenglykol, Butylenglykol, Diethylenglykol, Triethylenglykol, Dipropylenglykol, Tripropylenglykol, Polyalkylenglykole wie Polyethylenglykol, 1,4-Cyclohexandimethanol, 1,4- Cyclohexandiol, Pentandiol, hydriertes Bisphenol A, 1,3-Propandiol, 1,4- Butandiol, 1,6- Hexandiol, Neopentylglykol, Hydroxypivalinsäureneopentylglykolester, Trimethylolpropan, Trimathylolethan, Glycerin, Erythrit, Pentaerythrit, Trimethylolbenzol oder Trishydroxyethylisocyanurat, Mono-, Di- und/oder Triamine wie z.B. Ethylendiamin, Propylendiamin, 1,2-Diaminopropan, 1,4-Diaminobutan, 2,5-Diamino-2,5-dimethylhexan, 1,5-Diamino-2-methylpentan (Dytek^{®} A, DuPont), 1,6-Diaminohexan, 2,2,4- und/oder 2,4,4-Trimethyl-1,6-diaminohexan, 1,11-Diaminoundecan, 1,12-Diaminododecan; Triaminononan, Hydrazin, Hydrazinhydrat, Adipinsäuredihydrazid, Diethylentriamin, höhermolekulare Polyetherpolyamine mit aliphatisch gebundenen, primären Aminogruppen, wie sie beispielsweise unter der Bezeichnung Jeffamin^{Ⓡ} von der Firma Huntsman vertrieben werden, 1-Amino-3,3,5-trimethyl-5-aminomethylcyclohexan (IPDA), 2,4- und/oder 2,6-Hexahydrotoluylendiamin (H₆TDA), Isopropyl-2,4-diaminocyclohexan und/oder Isopropyl-2,6-diaminocyclohexan, 1,3-Bis-(aminomethyl)-cyclohexan, 2,4'- und/oder 4,4' -Diamino-dicyclohexylmethan, 3,3'-Dimethyl-4,4'-diamino-dicyclohexylmethan (Laromin^{Ⓡ} C 260, BASF AG, DE), die Isomeren, eine Methylgruppe als Kernsubstituenten aufweisenden Diaminodicyclohexylmethane (= C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)-benzol, Xylylendiamin, monofunktiontlle Blockierungsmittel wie z.B. Methanol, Ethanol, Butanol, Hexanol, Benzylalkohol, Acetoxim, Methylethylketoxim, Caprolactam, Phenole, Acetessigester oder Malonsäureester wie z.B. Diethytmalonat, Dimethylpyrazol, Amine wie z.B. tert. Butylbenzylamin, Triazol, Dimethyltriazol, Dicyclohexylamin und/oder Diisopropylamin, Aminoalkohole wie 2-Aminoethanol, Aminopropanole, Diethanolamin, Diisopropanolamin, N-Methylethanolamin, 3-Amino-l,2-propandiol, Aminobutanole, 1,3-Diamino-2-propanol, Bis.(2-hydroxypropyl)-amin, Propanolamin 1,1'-Dimethyl-1,1'-dipropyl-2,2'iminodiethanol, 2-[(2-Hydroxyethyl)-amino-2-methylpropan-1-ol, 1-(2-Hydroxyethyl-)-amino-2-propanol, 3,3'-Diallyloxy-2,2'-dihydroxy-dipropylamin, Hydroxyethylethylendiamin und Bis(hydroxyethyl)ethylendiamin.

Ebenfalls geeignet sind Michaeladdukte, die z.B. durch Reaktion bifunktioneller, primärer Amine mit Maleinsäurediestern erhalten werden und als Asparaginsäurcester bezeichnet werden. Beschrieben sind solche Asparaginsäureester beispielsweise in der EP-A 403 921.

Ebenfalls geeignete Komponenten e) für die Mitverwendung sind mono-, oder difunktionelle Amine die zusätzlich Alkoxysilangruppen enthalten.

Ebenfalls mit verwendet werden können Monoamine wie z.B. Butylamin, Dibutylamin, Diethylamin, Cyclohexylamin.

Ebenfalls geeignet sind Diole und/oder Triole, die Umsetzungsprodukte der beispielhaft genannten Diole bzw. Triole mit Ethylenoxid, Propylenoxid und/oder Caprolacton sind.

Ebenfalls geeignet sind Mischungen der genannten Komponenten e) aller Art, ggf, auch mit weiteren Komponenten.

In einer bevorzugten Ausführungsform des Verfahrens werden
a) 7 bis 50 Gew. -% mindestens eines, mindestens difunktionellen Polyisocyanates, bestehend zu 50 bis 100 Gew. -% aus cycloaliphatischen Diisocyanaten wie Isophorondiisocyanat, Hexahydro-2,4 bzw. 2,6-Diisocyanatotoluol, 1-Methyl-2,4(2,6)-diisocyanatoeyelohexan, 4,4'- Diisocyanatodicyclohcxylmethan und/oder aromatischen Di- bzw. Polyisocyanaten wie 2,4- und/oder 2,6-Diisocyanatotoluol, 4,4'- bzw. 2,4'- Diisocyanato-diphenylmethan und/oder dessen Homologe.
b) 30 bis 80 Gew. -% mindestens eines aromatische Strukturen enthaltenden Polyesterpolyols,
c) 2 bis 10 Gew. -% mindestens einer hydrophilierenden Komponente die neben mindestens einer hydrophilen Gruppe mindestens eine, vorzugsweise zwei isocyanatreaktive Gruppe aufweist,
d1) 0,5 bis 26 Gew. -% mindestens einer mono- oder di-hydroxy- und/ oder aminofunktionellen Verbindung mit einer oder mehreren, linearen und/oder verzweigten, gesättigten und/oder ungesättigten C8 bis C22- Kohlenwasserstoffketten,
d2) 0,5 bis 14 Gew. -% mindestens einer mono- oder di-hydroxy- und/oder aminofunktionellen aromatischen, ggf. substituierte Kohlenwasserstoffringe enthaltenden Verbindung,
e) 0 bis 15 Gew. -% weiterer Komponenten die isocyanatfunktionell bzw. isocyanatreaktiv sind,
miteinander umgesetzt.

In einer besonders bevorzugten Ausführungsform des Verfahrens werden
a) 7 bis 50 Gew. -% mindestens eines, mindestens difunktionellen Polyisocyanates, bestehend zu 60 bis 100 Gew. -% aus 2,4- und/oder 2,6-Diisocyanatotoluol oder 4,4' - bzw. 2,4'- Diisocyanatodiphenylmethan und/oder dessen Homologen.
b) 30 bis 80 Gew. -% mindestens eines aromatische Strukturen enthaltenden Polyesterpolyols,
c) 2 bis 10 Gew. -% mindestens einer hydropbilierenden Komponente die neben mindestens einer hydrophilen Gruppe mindestens eine, vorzugsweise zwei isocyanatreaktive Gruppe aufweist,
d1) 3 bis 18 Gew. -% mindestens einer monohydroxyfunktionellen Verbindung mit einer oder mehreren, linearen und/oder verzweigten, gesättigten und/oder ungesättigten C8 bis C22- Kohlenwasserstoffkette,
d2) 1 bis 10 Gew. -% mindestens einer monohydroxyfunktionellen aromatische, ggf. substituierte, Kohlenwasserstoffringc enthaltenden Verbindung,
e) 0 bis 15 Gew. -% weiterer Komponenten die isocyanatfunktionell bzw. isocyanatreaktiv sind
miteinander umgesetzt.

Die erfindungsgemäßen Polyurethane können Hydroxylgruppen und/oder blockierte Isocyanatgruppen aufweisen, sie können aber auch keine funktionellen Gruppen außer den zur Hydrophilierung erforderlichen Gruppen, z.B. Carboxylgruppen, aufweisen.

Die erfindungsgemäßen Polyurethane liegen vorteilhafterweise als wässrige Dispersion vor. Ein weiterer Gegenstand der vorliegenden Erfindung ist auch ein Verfahren zur Herstellung der erfindungsgemäßen Polyurethandispersionen wie auch die so erhältlichen Dispersionen, bei dem die vorstehend genannten Komponenten a) bis d) und ggf. e), ggf. in Gegenwart katalytisch wirksamer Substanzen und/oder Neutralisationsmittel, in einem oder mehreren aufeinander folgenden Reaktionsschritten miteinander umgesetzt werden, wobei das Verhältnis von NCO-Gruppen zu OH-, NH₂-, NH- und SH-Gruppen bei 2,0 bis 0,9 zu 1, vorzugsweise bei 1,4 bis 0,98 zu 1 und besonders bevorzugt bei 1,06 bis 1,0 zu 1 liegt, wobei Lösemittel und/oder Neutralisationsmittel vor, während und/oder nach der Reaktion zugesetzt werden können, wobei nach Umsetzung der Komponenten a) bis d) ggf. eine Kettenverlängerung mit Komponente e) in organischer Lösung durchgefiihrt wird, wobei anschließend in oder mit Wasser dispergiert wird, wobei ggf. anschließend eine Kettenverlängerung mit Komponente e) in wässriger Dispersion durchgeführt wird und wobei das Lösemittel vollständig oder anteilig während oder nach dem Dispergierschritt destillativ abgetrennt wird.

Ionische Hydrophilierungsmittel der Komponente c) werden vor oder während des Dispergierschritts durch Reaktion mit einem Neutralisationsmittel anteilig oder vollständig in das entsprechende Salz überführt. Dies ist prinzipiell vor oder während der einzelnen Verfahrensschritte bei den unten beschriebenen Fierstellprozessen möglich.

Der Neutralisationsgrad liegt üblicherweise bei 40 bis 150 mol%, bevorzugt bei 60 bis 120 mol%, wobei unter Neutralisationsgrad der Prozentanteil an Salzgruppen an der Gesamtmenge an (ionischen) hydrophilen Gruppen zu verstehen ist.

Geeignete Neutralisationsmittel die zur Neutralisation bzw. Salzbildung von Säuregruppen geeignet sind und ggf. bereits während der Umsetzung der Komponenten a) bis d) und ggf. e) vorhanden sein können, sind z.B. Triethylamin, Ethyldüsopropylamin, Dimethylisopropylamin, Dimethylcyclohexylamin, N-Methylmorpholin und deren Mischungen. Ebenfalls geeignet sind z.B. Kaliumhydroxid, Natriumhydroxid, Lithiumhydroxid, Ammoniak, Dimethylethanolamin, Methyldiethanolamin, Aminomethylpropanol, Diethanolamin, Ethanolamin,. Diisopropanolamin, N-Methyldiispropanolamin, Triethanolamin, Dibutylamin, Diethylamin, Dimethylisopropanolamin und Mischungen der genannten Neutralisationsmittel. Vorzugsweise werden die zuletzt genannten Neutralisationsmittel erst nach Umsetzung der Komponenten a) bis d) und ggf. e) zugegeben.

Geeignete Neutralisationsmittel zur Neutralisation von tertiären Aminogruppen sind z.B. Milchsäure, Essigsäure, Ameisensäure, Chloressigsäure, Trichloressigsäure, Propionsäure, Phosphorsäure, Schwefelsäure und Mischungen dieser und auch anderer Säuren.

Bevorzugtes Herstellverfahren für die erfindungsgemäßen Dispersionen ist die einstufige Umsetzung der Komponenten a) bis d), ggf. in Gegenwart katalytisch wirksamer Substanzen und/oder Neutralisationsmittel, in organischer Lösung bei einem Feststoffgehalt von 30 bis 95, vorzugsweise von 40 bis 80 Gew. -% in einem Verhältnis von NCO-Gruppen zu OH-, NH₂-, NH- und SH-Gruppen von 1,06 bis 1,0 zu bis zum gewünschten NCO-Gehalt, anschließend ggf. Zugabe von Neutralisationsmittel und/oder ggf. Zugabe weiterer Lösemittel, Dispergierung in oder mit Wasser und destillative Abtrennung des/der organischen Lösemittels während oder nach dem Destillationsschritt.

Üblicherweise entspricht der gewünschte NCO-Gehalt dem theoretischen NCO-Gehalt, wobei es auch möglich ist, die Umsetzung solange durchzuführen, bis NCO-Gehalte über oder unter dem theoretischen NCO-Gehalt erreicht sind, und dann den Dispergierschritt durchzuführen.

Bevorzugt ist die einstufige Umsetzung der Komponenten a) bis d) in einem Verhältnis von NCO-Gruppen zu OH-, NH₂-, NH- und SH-Gruppen von 1,06 bis 1,0 bis zu einem NCO-Gehalt unterhalb des theoretischen NCO-Gehaltes, vorzugsweise bis zu einem NCO-Gehalt von kleiner 0,3 Gew. -%, besonders bevorzugt von kleiner 0,1 Gew. -%.

Eventuell verbleibende restliche NCO-Gruppen können dann während oder nach dem Dispergierschritt mit Wasser abreagieren.

Das Lösemittel wird bevorzugt während oder nach dem Dispergierschritt destillativ abgetrennt.

Falls eine Kettenverlängerungsreaktion mit Komponente e) durchgeführt wird, wird ein Kettenverlängerungsgrad (definiert als Menge NCO-reaktiver Gruppen in e) zu noch vorhandenen NCO-Gruppen im Umsetzungsprodukt aus a) bis d)) von 30 bis 120 Gew.- %, bevorzugt von 45 bis 85 % gewählt.

Für eine Kettenverlängerungsreaktion sind Verbindungen mit 2 oder 3 Aminogruppen, Verbindungen mit 1 oder 2 Aminogruppen und 1 oder 2 Hydroxylgruppen oder Verbindungen mit 1 oder 2 Aminogruppen und Alkoxysilangruppen besonders gut geeignet.

Geeignete Kettenverlängerer e) sind z.B. Ethylendiamin, Isophorondiamin, Diethylentriamin, Hydroxyethylethylendiamin, Bis(hydroxyethyl)ethylendiamin, N-Methylethanolamin, Ethanolamin, Diethanolamin, Diisopropanolamin, Aminopropyl-trialkoxysilan.

Die Herstellung der erfindungsgemäßen Polyurethandispersionen erfolgt in organischer Lösung, die bevorzugt Feststoffgehalte von 30 bis 95 Gew. -%, besonders bevorzugt von 40 bis 80 Gew. -% auf weisen.

Grundsätzlich sind alle Lösemittel geeignet, die nicht mit Isocyanatgruppen reagieren und zumindest in Mischung mit anderen Lösemitteln ein ausreichendes Lösevermögen für die Rohstoffe bzw. Endprodukte aufweisen, wie z.B. Aceton, Methylethylketon, Methylisobutylketon, Solvent Naphta, Toluol, Xylol, Cyclohexan, Methoxypropylacetat, N-Methylpyrrolidon, N-Ethylpyrrolidon, Diethylenglykoldimethylether, Dipropylenglykol-dimethylether, Ethylenglykoldimethylether oder Tetramethoxymethan. Bevorzugtes Lösemittel ist Aceton.

Die Umsetzung der Komponenten a) bis d) und ggf. e) kann mit oder ohne Zusatz von katalytisch wirkenden Substanzen durchgeführt werden. Geeignete Katalysatoren sind die in der Polyurethanchemie gebräuchlichen Metallkatalysatoren wie z.B. Zinnverbindungen wie Dibutylzinndilaurat, Formrez^{®} UL 29 (Zinnkatalysator; Witco, USA), Butylzinnoxid, Dibutylzinnoxid, Fascat^{®} 4100 (Zinnkatalysator, Arkema, France), Zinnchlorid, Zinn-II-oktoat oder Wismutverbindungen wie z.B. Wismutoktoat, Quecksilberverbindungen wie z.B. Phenylquecksilberacetat, Zinkverbindungen, ebenfalls geeignet sind Aminkatalysatoren wie z.B. Diazabicyclononen, Diazabicyclooctan, Diazabicycloundecen oder Dimethylaminopyridin. Geeignete Katalysatormengen sind z.B. 25 bis 1000 ppm.

Es ist auch möglich als Neutralisationsmittel eingesetzte, nicht isocyanatreaktive Amine, wie z.B. Triethylamin oder Ethyldiisopropylamin als katalytisch wirksame Substanzen bei der Umsetzung von a) bis d) mit zu verwenden. Diese Neutralisationsmittel können dabei in der Menge eingesetzt werden, die zur Salzbildung mit den Säuregruppen zur gewünschten Hydrophilierung notwendig sind.

Bei der Herstellung bzw. nach der Herstellung der erfindungsgemäßen Polyurethandispersionen können auch übliche Hilfs- und Zusatzstoffe mit eingesetzt werden, wie z.B. Stabilisatoren gegen Bakterienbefall, Entschäumer, saure Stabilisatoren wie Dibutyphosphat, Stabilisatoren, Antioxidantien, Verdicker, Lichtschutzmittel, Verlaufshilfsmittel, Thermostabilisatoren, Antivergilbungsmittel, Netzmittel, Emulgatoren, Antiabsetzmittel, Dispergierhilfsmittel, Schaumstabilisatoren, Antihautmittel, oberflächenaktive Substanzen usw.

Die pH-Werte der erfindungsgemäßen Polyurethandispersionen liegen bei 3 bis 12, bei anionischen Dispersionen bevorzugt bei 6 bis 10, bei kationischen Dispersionen bevorzugt bei 4 bis 7.

Die erfindungsgemäßen Polyurethandispersionen weisen Festkörpergehalte von 20 bis 60, vorzugsweise von 30 bis 50 Gew. -% auf, die mittlere Teilchengröße der Dispersionen gemessen mittels Lichtstreuung beträgt typischerweise 15 bis 300, bevorzugt 20 bis 100 nm und besonders bevorzugt 20 bis 60 nm.

Die erfindungsgemäßen Polyurethane bzw. Polyurethandispersionen können in Kombination mit weiteren Polymeren, Dispersionen oder/und wässrigen Lösungen, wie z.B. PolyacrylatDispersionen, Polyacrylat-Emulsionen, Alkyd-Dispersionen, Polyurethan-PolyacrylatDispersionen, Styrol-Butadien-Latices, anderen Polyurethan-Dispersionen, Polyester-Dispersionen bzw. -lösungen, wässrigen bzw. wasserverdünnbaren Epoxidharzen, Epoxidharzen, Polyvinylchloriddispersionen, Polyvinylidenchloriddispersionen, Polyvinylpyrrolidondispersionen, Polyvinylimidazoldispersionen, Polyethylendispersionen, Acrylnitril(co)-polymerdispersionen, Styrol-(co)polymerdispersionen, Butadien(co)-polymerdispersionen, Vinylpyrrolidon-(co)polymerdispersionen, wässrigen Phenolharzen, wässrigen Kondensationspolymeren, wässrigen Additionspolymeren, Polymerisat-Dispersionen, Cellulose, Celluloseacetat und/oder Cellulosebutyrat, dispergierten, wasserlöslichen bzw. wasserdispergierbaren Polyvinylalkoholen und/oder ggf. anteilig hydrolysierten Polyvinylestern und/oder z.B. mit Silanolgruppen, Alkoxysilangruppen, Acetoacetylgruppen oder anderen reaktiven Gruppen modifizierten Polyvinylalkoholen bzw. Polyvinylestern, ggf. modifizierte bzw. ggf. anteilig hydrolysierte Polyethylenvinylestercopolymere bzw. Polyethylenvinylalkoholcopolymere, Polyvinyletherdispersionen bzw. -lösungen und/oder in Kombination mit Vernetzerharzen wie z.B. gegebenenfalls hydrophile Gruppen enthaltende Polyisocyanate mit freien oder mit blockierten Polyisocyanatgruppen, mit Polyaziridinen, mit Polyepoxiden, mit Polyalkoxysilanen, mit Polysiloxanen, mit Di- oder Polyhydraziden bzw. -aminen, mit Carbonylgruppen enthaltenden Polymeren und/oder Vernetzern, mit Aminovernetzerharzen, z.B. auf Melamin- oder Harnstoffbasis eingesetzt werden.

Bevorzugt werden die erfindungsgemäßen Polyurethane bzw. Polyurethandispersionen als alleiniges Bindemittel physikalisch trocknend, oder in Kombination mit Polyacrylatdispersionen, Polyacrylatemulsionen, Alkyddispersionen, Polyurethandispersionen, Polyesterdispersionen bzw. - lösungen, wässrigen bzw. wasserverdünnbaren Epoxidharzen, Epoxidharzen, dispergierten, wasserlöslichen bzw. wasserdispergierbaren Polyvinylalkoholen und/oder ggf. anteilig hydrolysierten Polyvinylestern und/oder z.B. mit Silanolgruppen, Alkoxysilangruppen, Acetoacetylgruppen oder anderen reaktiven Gruppen modifizierten Polyvinylalkoholen bzw. Polyvinylestern, ggf. modifizierte bzw. ggf. anteilig hydrolysierte Polyethylenvinylestercopolymere bzw. Polyethylenvinylalkoholcopolymere, Polyvinyletherdispersionen bzw. -lösungen, und/oder in Kombination mit Vernetzerharzen, wie z.B. gegebenenfalls hydrophile Gruppen enthaltenden Polyisocyanaten mit freien oder blockierten Polyisocyanatgruppen, mit Polyepoxiden, mit Polyalkoxysilanen, mit Di- oder Polyhydraziden bzw. -aminen, mit Carbonylgruppen enthaltenden Polymeren und/oder Vernetzern und/oder mit Aminovernetzerharzen eingesetzt.

Besonders bevorzugt ist die Verwendung in Kombination mit dispergierten, wasserlöslichen bzw. wasserdispergierbaren und/oder ggf. anteilig hydrolysierten Polyvinylestern und/oder z.B. mit Silanolgruppen, Alkoxysilangruppen, Acetoacetylgruppen oder anderen reaktiven Gruppen modifizierten Polyvinylalkoholen bzw. Polyvinylestern, ggf. modifizierte bzw. ggf. anteilig hydrolysierte Polyethylenvinylestercopolymere, Polyvinylester und/oder Polyesterdispersionen, Polyacrylatdispersionen, Polyurethandispersionen und/oder in Kombination mit bevorzugt genannten Vernetzerharzen.

Gegenstand der vorliegenden Erfindung sind daher auch Bindemittelkombinationen, enthaltend die erfindungsgemäßen Polyurethane bzw. Polyurethandispersionen.

Bevorzugt sind Bindemittelkombinationen, enthaltend 10 bis 90 Gew.-% erfindungsgemäße Polyurethane bzw. Polyurethandispersion und 90 bis 10 Gew. -% mindestens eines Polyvinylalkohols und/oder Polyvinylesters und/oder Polyvinylethers, wobei die Prozentangaben auf Festgehalte bezogen sind.

Die Polyvinylalkohole bzw. Polyvinylester bzw. Polyvinylether können dabei als wässrige Dispersion bzw. Lösung, als organisch gelöste bzw. dispergierte Polymere bzw. auch als wasserlösliche bzw. wasserdispergierbare Polymere eingesetzt werden,. Sie können auch anteilig bzw. ganz hydrolysiert sein, weitere Comonomere wie z.B Ethylen, Styrol, Butadien usw. enthalten und ggf. auch zusätzliche funktionelle bzw. reaktive bzw. vernetzende Gruppen wie z.B. Silanolgruppen, Alkoxysilangruppen und/oder Acetoacetylgruppen bzw. Carbonylgruppen aufweisen.

Die erfindungsgemäßen Polyurethane bzw. Polyurethandispersionen können eingesetzt werden in oder als Lack, Beschichtung und/oder Schlichte zur Beschichtung von ggf. bereits vorbeschichteten mineralischen bzw. keramisch Untergründen und Materialien, Beton, Asphalt, Bitumen, Gips, Kalk, Hartfaserwerkstoffen, metallischen Untergründen, Kunststoffen, Kunststofffolien, Papier, Druckpapier, Pappe, Papierbahnen, Karton, künstlichen Papiermaterialien, Verbundmaterialen aus Papier und Kunststoffen, Verbundwerkstoffen, Glas, Glasfasern, Porzellan, Textil, Leder, hölzerne und holzartige Substrate wie z.B. Möbel, Holzfaserplatten, Parkett, Fensterrahmen, Türen, Zäune, Panellen, Bretter, Balken, Dächer. Die erfindungsgemäßen Polyurethane bzw. Polyurethandispersionen können eingesetzt werden z.B. in oder als Einschichtlack(en), Mehrschichtlacken, Grundierung, als Zwischenschicht, als Füller, als Basislack, als Base coat, als Decklack, als Barriereschicht, als Primer, als Haftvermittler, als Schutzschicht, als Abziehlack, als temporäre Beschichtung, als interne oder externe Schlichte , in Funktionsschichten, als Overcoat, als Clearcoat, als Klarlack, als pigmentierter Lack, darüber hinaus auch in Klebstoffen, Dichtmassen, Druckfarben, Tinten, Schäumen, Folien aller Art und Fasern.

Die Aushärtung kann durch physikalische Trocknung oder/und durch Vernetzungsreaktion in Gegenwart entsprechender Vernetzer bei Umgebungstemperatur bis 300°C erfolgen.

Beschichtungen basierend auf den erfindungsgemäßen Polyurethanen bzw. Polyurethandispersionen weisen Barriereeigenschaften z.B. in Bezug auf Weichmacher, wässrige Materialien bzw. Zubereitungen, Lösemittel, lösemittelhaltige Systeme und/oder ölige Substanzen auf.

Die Bestimmung der Barrierewirkung kann z.B. durch Belastung entsprechender Polymerfilme mit diversen Chemikalien bzw. Materialen unter definierten Temperatur- und Zeitbedingungen und anschließender optischer Beurteilung der Veränderung der Polymerfilme erfolgen.

### Beispiele

Sofern nicht abweichend vermerkt, sind alle Prozentangaben als Gewichtsprozent zu verstehen.

Die mittlere Teilchengröße der Dispersionen wird mittels Lichtstreuung gemessen.

Die angegebenen Viskositäten wurden gemäß DIN 53229 bei 23°C gemessen.

Die angegebenen NCO-Gehalte wurden gemäß DIN EN ISO 11909 bestimmt.

Die angegebenen Feststoffgehalte wurden gemäß DIN EN ISO 3251 1 bestimmt.

Säure- und OH-Zahl werden durch Titration mit KOH bestimmt.

### Polyester A)

9860 g Isophthalsäure, 3650 g Neopentylglykol und 2176 g Ethylenglykol wurden durch Veresterung bei 230°C zu Polyester A) umgesetzt. Polyester A) hatte eine Säurezahl von 4 mg KOH/g und eine OH-Zahl von 81 mg KOH/G Substanz

### Polyester B)

1627 Isophthalsäure, 1627 g Terephthalsäure, 773 g Ethylenglykol, 91 g Rizinusöl und 1177 g Neopentylglykol wurden durch Veresterung bei 230°C zu Polyester B) umgesetzt. Polyester B) hatte eine Säurezahl von 3,7 mg KOH/g Substanz und eine OH-Zahl von 72 mg KOH/g Substanz.

### Polyester C)

4784 Isophthalsäure, 4784 g Terephthalsäure, 2274 g Ethylenglykol, 267 g Rizinusöl und 3460 g Neopentylglykol wurden durch Veresterung bei 230°C zu Polyester C) umgesetzt. Polyester C) hatte eine Säurezahl von 4 mg KOH/g Substanz und eine OH-Zahl von 91 mg KOH/g Substanz.

### Polyester D)

4482 Isophthalsäure, 4482 g Terephthalsäure, 493 g Adipinsäure, 2595 g Ethylenglykol und 2574 g Neopentylglykol wurden durch Veresterung bei 230°C zu Polyester D) umgesetzt. Polyester D) hatte eine Säurezahl von 3,2 mg KOH/g Substanz und eine OH-Zahl von 64 mg KOH/g Substanz.

### Polyester E)

4784 Isophthalsäure, 4784 g Terephthalsäure, 2550 g Ethylenglykol und 3079 g Neopentylglykol wurden durch Veresterung bei 230°C zu Polyester E) umgesetzt. Polyester E) hatte eine Säurezahl von 4 mg KOH/g Substanz und eine OH-Zahl von 105 mg KOH/g Substanz.

### Polyester F)

1313 Isophthalsäure, 1313 g Terephthalsäure, 508 g Ethylenglykol und 917 g Neopentylglykol, 272 g Trimethylolpropan und 524 g Palmitinsäure (C16) wurden durch Veresterung bei 230°C zu Polyester D) umgesetzt. Polyester F) hatte eine Säurezahl von 4 mg KOH/g Substanz und eine OH-Zahl von 66 mg KOH/g Substanz.

### Polyurethandispersion 1)

In ein 2 l Reaktionsgefäß mit Rührer und Rückflusskühler wurden 366,2 g Polyester A) bei 120°C aufgeschmolzen, 53,3 g Dimethylolpropionsäure, 26 g Benzylalkohol und 49,5 g Stearylalkohol zugegeben und homogenisiert. Durch langsame Zugabe von 217 g Aceton wurde der Ansatz verdünnt. Anschließend wurde unter Rühren eine Mischung aus 129,2 g Desmodur® T80 (Gemisch aus ca. 80 Teilen 2,4- und ca. 20 Teilen 2,6-Diisocyanatotoluol , Bayer MaterialScience AG) und 33 g Isophorondiisocyanat zugegeben und das Reaktionsgemisch mit 100 ppm Desmorapid^{®} SO (Dibutylzinnoxid, Bayer MaterialScience, Leverkusen, DE) versetzt. Diese Reaktionsmischung wurde unter Rückfluss solange gerührt, bis der NCO-Wert 0% war. Dann wurden 40 g Triethylamin zur Neutralisation der Carboxylgruppen zugegeben und anschließend durch Zugabe von 1040 g destilliertem Wasser dispergiert. Nach der destillativen Abtrennung des Acetons erhielt man die erfindungsgemäße, praktisch lösemittelfreie Polyurethandispersion 1) mit einem Festkörpergehalt von 38%, einer Viskosität von 470 mPas/23°C, einem pH-Wert von 7,7 und einer mittleren Teilchengröße von 35 nm.

### Polyurethandispersion 2)

In ein 2 l Reaktionsgefäß mit Rührer und Rückflusskühler wurden 327,6 g Polyester B) bei 120°C aufgeschmolzen, 49 g Dimethylolpropionsäure und 57,5 g Stearylalkohol zugegeben und homogenisiert. Durch langsame Zugabe von 200 g Aceton wurde der Ansatz verdünnt und dabei auf 55°C abgekühlt, dann wurden 24,3 g Benzylalkohol zugegeben und homogenisiert. Anschließend wurde unter Rühren eine Mischung aus 117,5 g Desmodur® T80 (Gemisch aus ca. 80 Teilen 2,4- und ca. 20 Teilen 2,6-Diisocyanatotoluol, Bayer MaterialScience AG) und 30 g Isophorondiisocyanat zugegeben und das Reaktionsgemisch mit 100 ppm Desmorapid^{®} SO versetzt. Diese Reaktionsmischung wurde unter Rückfluss solange gerührt, bis der NCO-Wert < 0,1% war. Dann werden 37 g Triethylamin zur Neutralisation der Carboxylgruppen zugegeben und anschließend durch Zugabe von 970 g destilliertem Wasser dispergiert. Nach der destillativen Abtrennung des Acetons erhielt man die erfindungsgemäße, praktisch lösemittelfreie Polyurethandispersion 2) mit einem Festkörpergehalt von 39%, einer Viskosität von 560 mPas/23°C, einem pH-Wert von 7,6 und einer mittleren Teilchengröße von 36 nm.

### Polyurethandispersion 3)

In ein 2 l Reaktionsgefäß mit Rührer und Rückflusskühler wurden 321,6 g Polyester C) bei 120°C aufgeschmolzen, 49,3 g Dimethylolpropionsäure, 24,2 g Benzylakohol und 58,8 g Stearylalkohol zugegeben und homogenisiert. Durch langsame Zugabe von 204 g Aceton wurde der Ansatz verdünnt und dabei auf 55°C abgekühlt. Anschließend wurde unter Rühren eine Mischung aus 106,2 g Desmodur® T80 (Gemisch aus ca. 80 Teilen 2,4- und ca. 20 Teilen 2,6-Diisocyanatotoluol, Bayer MaterialScience AG) und 56,8 g Isophorondiisocyanat zugegeben und das Reaktionsgemisch mit 200 ppm Desmorapid^{®} SO versetzt. Diese Reaktionsmischung wurde unter Rückfluss solange gerührt, bis der NCO-Wert ca. 0,1% war. Dann wurden 37,2 g Triethylamin zur Neutralisation der Carboxylgruppen zugegeben und anschließend durch Zugabe von 890 g destilliertem Wasser dispergiert. Nach der destillativen Abtrennung des Acetons erhielt man die erfindungsgemäße, praktisch lösemittelfreie Polyurethandispersion 3) mit einem Festkörpergehalt von 40%, einer Viskosität von 640 mPas/23°C, einem pH-Wert von 7,6 und einer mittleren Teilchengröße von 31 nm.

### Polyurethandispersion 4)

In ein 2 l Reaktionsgefäß mit Rührer und Rückflusskühler wurden 386,9 g Polyester D) bei 120°C aufgeschmolzen, 54,7 g Dimethylolpropionsäure, 26,4 g Benzylalkohol und 50,8 g Stearylalkohol zugegeben und homogenisiert. Durch langsame Zugabe von 200 g Aceton wurde der Ansatz verdünnt und dabei auf 55°C abgekühlt. Anschließend wurde unter Rühren eine Mischung aus 124,9 g Desmodur® T80 (Gemisch aus ca. 80 Teilen 2,4- und ca. 20 Teilen 2,6-Diisocyanatotoluol, Bayer MaterialScience AG) und 31,9 g Isophorondiisocyanat zugegeben und das Reaktionsgemisch mit 200 ppm Desmorapid^{®} SO versetzt. Diese Reaktionsmischung wurde unter Rückfluss solange gerührt, bis der NCO-Wert ca. 0,15% war. Dann wurden 41,2 g Triethylamin zur Neutralisation der Carboxylgruppen zugegeben und anschließend durch Zugabe von 960 g destilliertem Wasser dispergiert. Nach der destillativen Abtrennung des Acetons erhielt man die erfindungsgemäße, praktisch lösemittelfreie Polyurethandispersion 4) mit einem Festkörpergehalt von 40%, einer Viskosität von 480 mPas/23°C, einem pH-Wert von 7,6 und einer mittleren Teilchengröße von 26 nm.

### Polyurethandispersion 5)

In ein 2 l Reaktionsgefäß mit Rührer und Rückflusskühler wurden 430,6 g Polyester B) bei 120°C aufgeschmolzen, 66,2 g Dimethylolpropionsäure und 77,8 g Stearylalkohol zugegeben und homogenisiert. Durch langsame Zugabe von 262 g Aceton wurde der Ansatz verdünnt und dabei auf 55°C abgekühlt, dann wurden 32,4 g Benzylalkohol zugegeben und homogenisiert. Anschließend wurden unter Rühren 187,9 g Desmodur® T80 (Gemisch aus ca. 80 Teilen 2,4-und ca. 20 Teilen 2,6-Diisocyanatotoluol, Bayer MaterialScience AG) zugegeben und das Reaktionsgemisch mit 150 ppm Desmorapid^{®} SO versetzt. Diese Reaktionsmischung wurde unter Rückfluss solange gerührt, bis der NCO-Wert < 0,1% war. Dann wurden 49,9 g Triethylamin zur Neutralisation der Carboxylgruppen zugegeben und anschließend durch Zugabe von 1350 g destilliertem Wasser dispergiert. Nach der destillativen Abtrennung des Acetons erhielt man die erfindungsgemäße, praktisch lösemittelfreie Polyurethandispersion 5) mit einem Festkörpergehalt von 35%, einer Viskosität von 670 mPas/23°C, einem pH-Wert von 8,1 und einer mittleren Teilchengröße von 49 nm.

### Polyurethandispersion 6)

In ein 2 l Reaktionsgefäß mit Rührer und Rückflusskühler wurden 338,9 g Polyester C) bei 120°C aufgeschmolzen, 50 g Dimethylolpropionsäure, 24,2 g Benzylalkohol und 46,3 g Stearylalkohol zugegeben und homogenisiert. Durch langsame Zugabe von 203 g Aceton wurde der Ansatz verdünnt und dabei auf 55°C abgekühlt. Anschließend wurde unter Rühren eine Mischung aus 124,9 g Desmodur® T80 (Gemisch aus ca. 80 Teilen 2,4-und ca. 20 Teilen 2,6-Diisocyanatotoluol, Bayer MaterialScience AG) und 31,9 g Isophorondiisocyanat zugegeben und das Reaktionsgemisch mit 200 ppm Desmorapid^{®} SO versetzt. Diese Reaktionsmischung wurde unter Rückfluss solange gerührt, bis der NCO-Wert < 0,14% war. Dann wurden 37,7 g Triethylamin zur Neutralisation der Carboxylgruppen zugegeben und anschließend durch Zugabe von 920 g destilliertem Wasser dispergiert. Nach der destillativen Abtrennung des Acetons erhielt man die erfindungsgemäße, praktisch lösemittelfreie Polyurethandispersion 6) mit einem Festkörpergehalt von 39%, einer Viskosität von 570 mPas/23°C, einem pH-Wert von 7,6, und einer mittleren Teilchengröße von 36 nm.

### Polyurethandispersion 7)

In ein 2 l Reaktionsgefäß mit Rührer und Rückflusskühler wurden 362,3 g Polyester C) bei 120°C aufgeschmolzen, 49 g Dimethylolpropionsäure, 24,3 g Benzylalkohol und 51,1 g Stearylalkohol zugegeben und homogenisiert. Durch langsame Zugabe von 200 g Aceton wurde der Ansatz verdünnt und dabei auf 55°C abgekühlt. Anschließend wurde unter Rühren eine Mischung aus 117,5 g Desmodur® T80 (Gemisch aus ca. 80 Teilen 2,4-und ca. 20 Teilen 2,6-Diisocyanatotoluol, Bayer MaterialScience AG) und 30 g Isophorondiisocyanat zugegeben und das Reaktionsgemisch mit 100 ppm Desmorapid^{®} SO versetzt. Diese Reaktionsmischung wurde unter Rückfluss solange gerührt, bis der NCO-Wert < 0,1% war. Dann wurden 37 g Triethylamin zur Neutralisation der Carboxylgruppen zugegeben und anschließend durch Zugabe von 970 g destilliertem Wasser dispergicrt. Nach der destillativen Abtrennung des Acetons erhielt man die erfindungsgemäße, praktisch lösemittelfreie Polyurethandispersion 7) mit einem Festkörpergehalt von 39%, einer Viskosität von 560 mPas/23°C, einem pH-Wert von 7,6, und einer mittleren Teilchengröße von 36 nm.

### Polyurethandispersion 8)

In ein 3 l Reaktionsgefäß mit Rührer und Rückflusskühler wurden 427,5 g Polyester E) bei 120°C aufgeschmolzen, 65,3 g Dimethylolpropionsäure, 32,1 g Benzylalkohol und 78,4 g Stearylalkohol zugegeben und homogenisiert. Durch langsame Zugabe von 275 g Aceton wurde der Ansatz verdünnt und dabei auf 55°C abgekühlt, anschließend wurde unter Rühren eine Mischung aus 155,4 g Desmodur® T80 (Gemisch aus ca. 80 Teilen 2,4-und ca. 20 Teilen 2,6-Diisocyanatotoluol, Bayer MaterialScience AG) und 73,3 g Isophorondiisocyanat zugegeben. Das Reaktionsgemisch wurde nach 2 Stunden mit 49,2 g Triethylamin versetzt. Diese Reaktionsmischung wurde unter Rückfluss solange gerührt, bis der NCO-Wert von 0 % erreicht war. Dann wurde durch Zugabe von 1450 g destilliertem Wasser dispergiert. Nach der destillativen Abtrennung des Acetons erhielt man die erfindungsgemäße, praktisch lösemittelfreie Polyurethandispersion 8) mit einem Festkörpergehalt von 37%, einer Viskosität von 8000 mPas/23°C, einem pH-Wert von 8,0 und einer mittleren Teilchengröße von 56 nm.

### Polyurethandispersion 9)

In ein 3 l Reaktionsgefäß mit Rührer und Rückflusskühler wurden 558,5 g Polyester F) bei 105°C aufgeschmolzen, 53,8 g Dimethylolpropionsäure und 86,7 g Stearylalkohol zugegeben und homogenisiert. Durch langsame Zugabe von 284 g Aceton wurde der Ansatz verdünnt, dabei auf 55°C abgekühlt, mit 200 ppm Desmorapid^{®} SO versetzt. Anschließend wurden unter Rühren 162,6 g Desmodur® T80 (Gemisch aus ca. 80 Teilen 2,4-und ca. 20 Teilen 2,6-Diisocyanatotoluol, Bayer MaterialScience AG) zugegeben. Diese Reaktionsmischung wurde unter Rückfluss solange gerührt, bis ein NCO-Wert von < 0,3 % erreicht war. Dann wurde durch Zugabe von 40,6 g Triethylamin neutralisiert und durch Zugabe von destilliertem Wasser dispergiert. Nach der destillativen Abtrennung des Acetons erhielt man die erfindungsgemäße, praktisch lösemittelfreie Polyurethandispersion 9) mit einem Festkörpergehalt von 34%, einer Viskosität von 250 mPAs mPas/23°C, einem pH-Wert von 7,7 und einer mittleren Teilchengröße von 38 nm.

### Polyurethandispersion 10)

In ein 3 l Reaktionsgefäß mit Rührer und Rückflusskühler wurden 400,5 g Polyester A) bei 120°C aufgeschmolzen, 52,5 g Dimethylolpropionsäure, 3,5 g Benzylalkohol und 49,5 g Stearylalkohol zugegeben und homogenisiert. Durch langsame Zugabe von 217,5 g Aceton wurde der Ansatz verdünnt und dabei auf 55°C abgekühlt, anschließend wurde unter Rühren eine Mischung aus 126,5 g Desmodur® T80 (Gemisch aus ca. 80 Teilen 2,4-und ca. 20 Teilen 2,6-Diisocyanatotoluol, Bayer MaterialScience AG) und 33 g Isophorondiisocyanat zugegeben, anschließend wurden 200 ppm Desmorapid^{®} SO zugesetzt. Diese Reaktionsmischung wurde unter Rückfluss solange gerührt, bis ein NCO-Wert von 0,8 % erreicht war. Durch Zugabe von 39,6 g Triethylamin wurden die Carboxylgruppen neutralisiert, durch Zugabe von 1150 g destilliertem Wasser dispergiert. Anschließend wurde eine wässrige Lösung aus 12,4 g Hydroxyethyl-ethylendiamin und 60 g Wasser zur Kettenverlängerung zugegeben. Nach der destillativen Abtrennung des Acetons erhielt man die erfindungsgemäße, praktisch lösemittelfreie Polyurethandispersion 10) mit einem Festkörpergehalt von 34%, einer Viskosität von 680 mPas/23°C, einem pH-Wert von 8,3 und einer mittleren Teilchengröße von 22 nm.

### Nicht erfindungsgemäße Polyurethandispersion 11)

Zu Vergleichszwecken wurde die Polyurethandispersion Impranil® DLN (Bayer MaterialScience AG, Leverkusen, Deutschland) eingesetzt. Impranil® DLN ist eine 40%ige Polyurethandispersion auf Basis linearaliphatischer Polyisocyanate und aliphatischer Polyester und weist einen mittlere Teilchengröße von ca. 150 nm auf, der pH-Wert ist ca. 7. Sie enthält keine hydrophobierende Komponente.

### Anwendungstests:

A) Die erfindungsgemäße, hydrophobe Komponenten enthaltende Polyurethandispersion 8) wurde mit unterschiedlichen Mengen Aminovernetzerharz (Cymel® 328, Cytec Industries Inc., Methyliertes Melamin-Formaldehyd-Vernetzerharz, gelöst in Wasser) gemischt und jeweils mit 6% N-Methylpyrrolidon als Koaleszenzmittel versetzt. Es wurden Klarlackfilme auf Glasplatten und auf Bonderbleche aufgezogen, 20 Minuten bei Raumtemperatur abgelüftet und dann für 30 Minuten bei 160°C eingebrannt. Man erhielt Lackfilme mit folgenden Eigenschaften:

| ***Applikation und Prüfung auf Glasplatten*** | **8 Teile Polyurethan-dispersion 8)** **+ 2 Teile Cymel 328** | **7 Teile Polyurethan-dispersion 8)** **+ 3 Teile Cymel 328** |
|---|---|---|
| Pendelhärte [s] | 230 | 201 |
| Ethanolbeständigkeit 1) | sehr gut | exzellent |
| ***Applikation und Prüfung auf Bonderblechen*** | **10 Teile Polyurethan-dispersion 8)** **+ 2 Teile Cymel 328** | **10 Teile Polyurethan-dispersion 8)** **+ 3 Teile Cymel 328** |
| Filmoptik, Verlauf | sehr gut | sehr gut |
| Pendelhärte [s] | 190 | 199 |
| Ethanolbeständigkeit1) | sehr gut | exzellent |
| Weichmacherbeständigkeit 2) | exzellent | exzellent |
| Wasserfestigkeit 3) | exzellent | exzellent |

| | | |
|---|---|---|
| 1) Ethanolbeständigkeit : Belastung mit einem mit Ethanol getränkten Wattebausch. Beurteilung: Exzellent = > 3h Belastung + 5 Minuten Regeneration ohne Befund; sehr gut = > 30 Minuten Belastung + 5 Minuten Regeneration ohne Befund; gut - > 20 Minuten Belastung + 5 Minuten Regeneration ohne Befund; ausreichend = > 10 Minuten Belastung + 5 Minuten Regeneration ohne Befund; ungenügend = < 5 Minuten Belastung + 5 Minuten Regeneration ohne Befund. 2) Weichmacherbestandigkeit: Belastung mit einem mit Weichmacher (Adipinsäure-bis-2-ethylhexanoat) getränkten Wattebausch. Beurteilung wie bei der Wasserfestigkeit 3) Wasserfestigkeit : Belastung mit einem mit Wasser getränkten Wattebausch. Beurteilung: Exzellent = > 48 h Belastung + 5 Minuten Regeneration ohne Befund; sehr gut = > 24 h Belastung + 5 Minuten Regeneration ohne Befund: gut = > 8 Stunden Belastung + 5 Minuten Regeneration ohne Befund; ungenägend = < 4 Stunden Belastung + 5 Minuten Regeneration ohne Befund. | | |

Man erhielt Beschichtungen mit sehr hoher Härte, sehr guten Beständigkeits- bzw. Barriereeigenschaften und sehr guter Filmoptik.
B) Die nicht erfindungsgemäße Polyurethandispersion 11) wurde mit unterschiedlichen Mengen Aminovernetzerharz (Cymel® 328, Cytec Industries Inc., Methyliertes Melamin-Formaldehyd-Vernetzerharz, gelöst in Wasser) gemischt und jeweils mit 6% N-Methylpyrrolidon als Koaleszenzmittel versetzt. Es wurden Klarlackfilme auf Glasplatten und auf Bonderbleche aufgezogen, 20 Minuten bei Raumtemperatur abgelüftet und dann für 30 Minuten bei 160°C eingebrannt. Man erhielt Lackfilme mit folgenden Eigenschaften:

| ***Applikation und Prüfung auf Glasplatten*** | **8 Teile Polyurethan-dispersion 11)** **+ 2 Teile Cymel 328** | **7 Teile Polyurethan-dispersion11)** **+ 3 Teile Cymel 328** |
|---|---|---|
| Pendelhärte [s] | 64 | 104 |
| Ethanolbeständigkeit 1) | ungenügend | ausreichend |
| ***Applikation und Prüfung auf Bonderblechen*** | **10 Teile Polyurethan-dispersion 11)** **+ 2 Teile Cymel 328** | **10 Teile Polyurethan-dispersion 11)** **+ 3 Teile Cymel 328** |
| Filmoptik, Verlauf | sehr gut | gut |
| Pendelhärte [s] | 61 | 98 |
| Ethanolbeständigkeit1) | ungenügend | ausreichend |
| Weichmacherbeständigkeit 2) | ungenügend | ungenügend |
| Wasserfestigkeit 3) | ungenügend | ausreichend |

Man erhielt Beschichtungen mit relativ niedriger Härte und unzureichenden Beständigkeits- bzw. Barriereeigenschaften.
C) Aus den erfindungsgemäßen Polyurethandispersionen 2), 3), 6), 7) und 10) wurden jeweils Lacke formuliert, die folgende Zusammensetzung aufweisen (jeweils bezogen auf Feststoffgehalt): 15% Polyurethandispersion, 25% selbstvernetzender Polyvinylakohol/Polyvinylacetat, 60% Schichtsilikat. Die Bestandteile wurden zusammen mit Wasser zu einem Lack mit einem Feststoffgehalt von ca. 20% gemischt. Aus den Lacken wurden durch Aufziehen mit einem Filmzieher und Trocken der Filme bei erhöhter Temperatur Beschichtungen mit einer Trockenfilmstärke von ca. 6 bis 8 µm erzeugt.
Anschließend wurden die Beständigkeits- bzw. Barriereeigenschaften getestet:

| | Polyurethan-dispersion 2) | Polyurethan-dispersion 3) | Polyurethan-dispersion 6) | Polyurethan-dispersion 7) | Polyurethan-dispersion 10) |
|---|---|---|---|---|---|
| Wasserfestigkeit (15 h Belastung) | sehr gut | exzellent | exzellent | exzellent | exzellent |
| Weichmacherbeständigkeit (24 h/40°C Belastung) | exzellent | exzellent | exzellent | exzellent | exzellent |
| Weichmacherbeständigkeit (24 h/60°C Belastung) | gut | sehr gut | sehr gut | sehr gut | gut |
| Weichmacherfestigkeit (wässrige Weich macherlösung 15 h) | exzellent | exzellent | exzellent | exzellent | exzellent |
| Pflanzenölbeständigkeit (15 h Belastung) | exzellent | exzellent | exzellent | exzellent | exzellent |
| Ethanolfestigkeit (Wischtest) | exzellent | sehr gut | sehr gut | exzellent | exzellent |

| | | | | | |
|---|---|---|---|---|---|
| Bewertungsstufen: Exzellent = keinerlei Veränderung nach Belastung Sehr gut = geringe, aber vollständig reversible Veränderungen (z.B. minimales Erweichen) nach Belastung Gut = deutliche, aber vollständig reversible Veränderung (z.B. deutliches Erweichen) nach Belastung Ausreichend = bleibende, geringe bis mittlere Veränderung (z.B. Trübung oder Randbildung) nach Belastung Ungenügend = bleibende Beschädigung (z.B. Runzelbildung; Auflösen, Ablösen) nach Belastung | | | | | |

Die erfindungsgemäßen Polyurethandispersionen zeigen insgesamt sehr gute Beständigkeitseigenschaften, z.B. gegen Belastung mit Weichmachern wie Adipate oder Phthalate, gegen ölige Substanzen wie z.B. Pflanzenöl, gegen Ethanol und gegen Wasser.
Die Offset Bedruckbarkeit der entsprechenden Beschichtungen ist durchweg exzellent.
Die Polyurethandispersion 9) wurde wie oben beschrieben formuliert , appliziert und ausgehärtet, Die Beschichtung zeigt sehr gute bzw. exzellente Barrierewirkung gegen Wasser, Weichmacherbelastung bei 40°C, pflanzliche Öle und Ethanol. Die Beständigkeit gegen Weichmacher bei 60°C war ausreichend. Die Bedruckbarkeit ist exzellent.
Die Thermostabilität (kein Erweichen bei Temperaturen > 150°C) der Schutzbeschichtung auf Basis der erfindungsgemäßen Polyurethandispersionen war ebenfalls ausgezeichnet.
Insgesamt zeigen die erfindungsgemäßen Dispersionen ein sehr gutes Eigenschaftsniveau beim Einsatz in Schutz-Beschichtungen.
D) Die nicht erfindungsgemäße Polyurethandispersionen 11) wurde wie im Anwendungsbeispie B) beschrieben appliziert und geprüft. Folgende Werte wurden erhalten:

| | Polyurethandispersion 11) |
|---|---|
| Wasserfestigkeit (15 h Belastung) | ausreichend |
| Weichmacherbeständigkeit (24 h/40°C Belastung) | ungenügend |
| Weichmacherbeständigkeit (24 h/60°C Belastung) | ungenügend |
| Weichmacherfestigkeit (wässrige Weichmacherlösung 15 h) | ungenügend |
| Pflanzenölbeständigkeit (15 h Belastung) | ungenügend |
| Ethanolfestigkeit (Wischtest) | ungenügend |

Die nicht erfindungsgemäße Polyurethandispersion zeigen insgesamt sehr schlechte Beständigkeitseigenschaften.
Die Polyurethandispersion 11) wurden wie oben beschrieben als Schutzbeschichtung für Thermopapier formuliert, appliziert und ausgehärtet. Die Beschichtungen zeigen insgesamt eine unzureichende Barrierewirkung, Bedruckbarkeit und Barcode Lesbarkeit sind ebenfalls nicht ausreichend..
Die Thermostabilität (kein Erweichen bei Temperaturen > 150°C) der Schutzbeschichtung auf Basis der nicht erfindungsgemäßen Polyurethandispersion war ungenügend.
E) Die Polyurethandispersionen 1), 4), 5) und 8) wurden in Kombination mit einer hydroxyfunktionellen Polyurethandispersion (Bayhydrol® PT 241, Bayer MaterialSeience, Deutschland) und dem Aminovernetzerharz Cymel® 328 gemischt, Filme aufgezogen und bei 160°C eingebrannt.

| *Bonderbleche* | **40 Teile Polyurethan-dispersion 1) + 10 Teile Bayhydrol® PT 241+ 4 Teile Cymel® 328** | **40 Teile Polyurethan-dispersion 4) + 10 Teile Bayhydrol® PT 241+ 4 Teile Cymel® 328** | **40 Teile Polyurethan-dispersion S)+ 10 Teile Bayhydrol® PT 241 + 4 Teile Cymel® 328** | **40 Teile Polyurethan-dispersion 8) +10 Teile Bayhydrol® PT 241+ 4 Teile Cymel® 328** |
|---|---|---|---|---|
| Filmoptik, Verlauf | Sehr gut | Sehr gut | Sehr gut | Sehr gut |
| Pendelhärte [s] | 179 | 163 | 189 | 200 |
| Weichmacherbeständigkeit (2) | exzellent | exzellent | exzellent | exzellent |
| Wasser-festigkeit (3) | exzellent | exzellent | exzellent | exzellent |

Die eingebrannten Lackfilme überzeugen durch Filmoptik und Verlauf, hohe Härte und sehr gute Beständigkeitseigenschaften.
F) Die erfindungsgemäße Polyurethandispersion 3) wurde mit unterschiedlichen Mengen einer hydroxyfunktionellen Polyurethandispersion (Bayhydrol® PT 241, Bayer MateriaiScience, Leverkusen, DE) und mit dem Amionovemetzerharz Cymel® 328 und/oder mit einem mit Butanonoxim blockierten, in Aceton gelösten Polyisocyanatvernetzer auf Basis eines HDI-Trimerisats vermischt, Klarlacke appliziert und bei 155°C eingebrannt.

| *Bonderbleche* | **40 Teile Polyurethan-dispersion 3) + 20 Teile Bayhydrol PT 241+ 40 Teile Cymel 328** | 40 **Teile Polyurethan-dispersion 3) + w0 Teile Bayhydrol PT 241+ 4 Teile Cymel 328 + 6 Teile blockierter Polyisocyanatvernetzer** | **40 Teile Polyurethan-dispersion 3) + 10 Teile Bayhydrol PT 241+ 5 Teile Blockierter Polyisocyanatvernetzer** | **40 Teile Polyurethan-dispersion 3) + 20 Teile Bayhydrol PT 241+ 10 Teile Blockierter Poly-isocyanatvernetzer** |
|---|---|---|---|---|
| Pendelhärte [s] | 177 | 186 | 173 | 181 |
| Ethanol-festigkeit (1) | sehr gut | sehr gut | gut | sehr gut |
| Weichmacherbeständigkeit (2) | exzellent | exzellent | exzellent | exzellent |
| Wasser-festigkeit (3) | exzellent | exzellent | exzellent | exzellent |

Auch hier zeigen die erfindungsgemäßen Polyurethandispersionen insgesamt ein sehr gutes Eigenschaftsbild mit hoher Filmhärte und sehr guten Beständigkeit+ bzw. Barriereeigenschaften.

## Patentansprüche

1. Verfahren zur Herstellung von wasserdispergierbaren Polyurethanen, bei dem
a) 5 bis 60 Gew.% einer difunktionelle Polyisocyanate enthaltenden Polyisocyanatkomponente,
b) 20 bis 90 Gew.% einer aromatische Strukturen enthaltender Polyol-, Polythiol- und/oder Polyamin Komponente,
c) 1 bis 15 Gew.-% einer hydrophilierenden Komponente, deren Verbindungen neben mindestens einer hydrophilen Gruppe mindestens eine isocyanatreaktive Gruppe aufweisen,
d) 1 bis 40 Gew.-% einer hydrophobierenden Komponente und
e) 0 bis 25 Gew.% weiterer Komponenten die isocyanatfunktionell bzw. isocyanatreaktiv sind,
miteinander umgesetzt werden, wobei sich die Prozentangaben auf das Reaktionsprodukt der Komponenten a) bis e) bezieht und sich zu 100 Gew.-% aufaddieren.

2. Verfahren gemäß Anspruch 1, **dadurch gekennzeichnet, dass** die Komponente b) Polyesterpolyole die mindestens einen aromatischen Polyester enthält,

3. Verfahren gemäß Anspruch 2, **dadurch gekennzeichnet, dass** die aromatischen Polyester eine Hydroxylzahl von 10 bis 230 KOH/g Substanz aufweisen und die Umsetzungsprodukte sind von
b1) 38 bis 72 Gew, -% mindestens einer aromatischen Di- und/oder Tricarbonsäure bzw. deren Anhydrid,
b2) 20 bis 55 Gew. -% mindestens eines Diols,
b3) 0 bis 40 Gew. % an weiteren Komponenten ausgewählt aus der Gruppe bestehen aus Triolen, Tetraolen, monofunktionellen Alkoholen, Monocarbonsäuren, Monoepoxiden, Bisepoxiden, Polyepoxiden, Lactonen, aliphatischen bzw. cycloaliphatischen Di- oder Tricarbonsäuren bzw, deren Anhydriden.

4. Verfahren gemäß einem der Ansprüche 1 bis 3, **dadurch gekennzeichnet, dass** die Verbindungen der Komponente b) zahlenmittlere Molekulargewichte von 400 bis 12000 g/ Mol und eine Funktionalität in Form von Hydroxy-, Thio- und/oder Aminogruppen, 1,8 bis 2,5 aufweisen.

5. Verfahren gemäß einem der Ansprüche 1 bis 4, **dadurch gekennzeichnet, dass** als hydrophobierende Verbindungen der Komponente d)
d1) hydroxy-, thio- und/ oder aminofunktionelle Verbindungen mit einer oder mehreren, linearen und/oder verzweigten, gesättigten und/oder ungesättigten C6- bis C30-, vorzugsweise C8 bis C22- und besonders bevorzugt C12 bis C20 Kohlenwasser-stoffketten und/oder
d2) hydroxy-, thio- und/oder aminofunktionelle aromatische, ggf. substituierte Kohlenwasserstoffringe enthaltende Verbindungen
eingesetzt werden.

6. Verfahren gemäß einem der Ansprüche 1 bis 5, **dadurch gekennzeichnet, dass**
a) 7 bis 50 Gew. -% mindestens eines, mindestens difunktionellen Polyisocyanates, bestehend zu 50 bis 100 Gew, -% aus cycloaliphatischen Diisocyanaten und/oder aromatischen Di- bzw. Polyisocyanaten und 0 bis 50 Gew.-% weiterer Polyisocyanate
b) 30 bis 80 Gew. -% mindestens eines aromatische Strukturen enthaltenden Polyesterpolyols,
c) 2 bis 10 Gew. -% mindestens einer hydrophilierenden Komponente die neben mindestens einer hydrophilen Gruppe mindestens eine isocyanatreaktive Gruppe aufweist,
d1) 0,5 bis 26 Gew. -% mindestens einer mono- oder di-hydroxy- und/ oder aminofunktionellen Verbindung mit einer oder mehreren, linearen und/oder verzweigten, gesättigten und/oder ungesättigten C8 bis C22- Kohlenwasserstoffketten,
d2) 0,5 bis 14 Gew. -% mindestens einer mono- oder di-hydroxy- und/oder aminofunktionellen aromatischen, ggf. substituierte Kohlenwassersloffringe enthaltenden Verbindung,
e) 0 bis 15 Gew. -% weiterer Komponenten die isocyanatfunktionell bzw. isocyanatreaktiv sind,
miteinander umgesetzt werden.

7. Wasserdispergierbare Polyurethane erhältlich nach einem Verfahren gemäß einem der Ansprüche 1 bis 6.

8. Verfahren zur Herstellung wässriger Dispersionen enthaltend wasserdispergierbare Polyurethane gemäß Anspruch 7, bei dem nach Umsetzung der Komponenten a) bis d) miteinander das erhaltene Produkt in Wasser dispergiert wurde, wobei vor, während oder nach der Dispergierung in Wasser eine Kettenverlängerung durch Umsetzung mit Verbindungen der Komponente e) und/oder eine Deprotonierung von Säuregruppen durch Zugabe eines Neutralisationsmittels durchgeführt werden kann.

9. Verfahren gemäß Anspruch 8, **dadurch gekennzeichnet, dass** bei der Herstellung mit verwendetes organisches Lösungsmittel nach der Dispergierung in Wasser abdestilliert wird.

10. Polyurethandispersionen erhältlich nach einem Verfahren gemäß Anspruch 8 oder 9.

11. Polyurethandispersionen gemäß Anspruch 10, **dadurch gekennzeichnet, dass** sie Festkörpergehalte von 20 bis 60 Gew. -% und mittlere Teilchengrößen der Dispersionen von 20 bis 100 nm gemessen mittels Lichtstreuung aufweisen.

12. Bindemittelkombinationen enthaltend wasserdispergierbare Polyurethane gemäß Anspruch 7 und/oder Polyurethandispersionen gemäß Anspruch 10 oder 11.

13. Bindemittelkombinationen gemäß Anspruch 12, **dadurch gekennzeichnet, dass** sie ferner Polyvinylester, Pulyvinylalkohole, Polyvinylester, Polyethylenvinylestercopolymere, Polyvinylester und/oder Vernetzerharze ausgewählt aus der Gruppe bestehend aus gegebenenfalls hydrophile Gruppen enthaltende Polyisocyanate mit freien oder blockierten Polyisocyanatgruppen, Polyepoxide, Polyalkoxysilane, Di- oder Polyhydrazide bzw. -amine, Carbonylgruppen enthaltende Polymere und Aminovemetzerharze umfassen.

14. Beschichtungen erhältlich unter Verwendung von Bindemittelkombinationen gemäß Anspruch 12 oder 13.

15. Lacke, Beschichtungen und/oder Schlichten zur Beschichtung von ggf. bereits vorbeschichteten Untergründen und Materialien wie Beton, Asphalt, Bitumen, Gips, Kalk, Hartfaserwerkstoffen, metallischen Untergründen, Kunststoffen, Kunststofffolicn, Papier, Druckpapier, Pappe, Papierbahnen, Karton, künstlichen Papiermaterialien, Verbundmaterialen aus Papier und Kunststoffen, Verbundwerkstoffen, Glas, Galsfasern, Porzellan, Textil, Leder, hölzerne und holzartige Substrate wie z.B. Möbel, Holzfaserplatten, Parkett, Fensterrahmen, Türen, Zäune, Panellen, Bretter, Balken, Dächer in Form von Einschichtlack(en), Mehrschichtlacken, Grundierungen, Zwischenschichten, Füllern, Basislacken, Base coats, Decklacken, Barriereschichten, Primern, Haftvermittlern, Schutzschichten, Abzichlacken, temporären Beschichtungen, Schlichten, Funktionsschichten, Overcoats, Clear coats, Klarlacken, pigmentierten Lacken, sowie Klebstoffe, Dichtmassen, Druckfarben, Tinten, Schäumen, Folien und Fasern aller Art, enthaltend wässrige Polyurethane gemäß Anspruch 7) bzw. 10).
